# EUROPÄISCHE PATENTSCHRIFT

(11) **EP 0 190 995 B1**
(45) Veröffentlichungstag und Bekanntmachung des Hinweises auf die Patenterteilung: **28.07.1993**
(21) Anmeldenummer: 86810052.0
(22) Anmeldetag: 29.01.1986
(51) Int. Cl.: A01N 25/04, A01N 47/30

(54) **Fliessfähiges herbizides Mittel**
Flowable herbicidal agent
Agent herbicide coulable

(30) Priorität: 04.02.1985 DE 3503706
(43) Veröffentlichungstag der Anmeldung: 13.08.1986
(73) Patentinhaber: CIBA-GEIGY AG, 4002 Basel (CH)
(72) Erfinder: Koopmann, Peter, D-6374 Steinbach am Taunus (DE); Flemming, Horst, Dr., D-6380 Bad Homburg 6 (DE)

(56) Entgegenhaltungen:
- EP-A- 0 006 681
- EP-A- 0 072 047
- EP-A- 0 163 598
- DE-A- 3 210 869
- DE-A- 3 319 796
- CHEMICAL ABSTRACTS, Band 98, Nr. 7, 14. Februar 1983, Seite 248, Zusammenfassung Nr. 48647s, Columbus, Ohio, US; J.C. VAN DAMME: "Physicochemical compatibility of dinitroaniline emulsifiable concentrate-urea derivative mixtures", & PARASITICA 1981, 37(4), 197-202

## Beschreibung

Die vorliegende Erfindung betrifft ein fliessfähiges herbizides Mittel auf der Grundlage eines wässrigen Suspensionskonzentrats, das als aktive Komponente eine Mischung von N-(4-Chlor-3-methylphenyl)-N',N'-dimethylharnstoff (Chlortoluron) und N-(1-Aethylpropyl)-3,4-dimethyl-2,6-dinitroanilin (Pendimethalin) enthält.

Chlortoluron und Pendimethalin sind bekannte Herbizide, die beispielsweise in der britischen Patentschrift 1 255 258 und in der US Patentschrift 4 199 669 beschrieben sind. Beide Aktivsubstanzen sind in Form von speziell formulierten Konzentraten im Handel. So ist Chlortoluron beispielsweise als benetzbares Pulver (wettable Powder) und als wässriges Suspensionskonzentrat erhältlich, während Pendimethalin als Emulsionskonzentrat angeboten wird.

Die vorerwähnten Konzentrate, nämlich das benetzbare Pulver, das Suspensionskonzentrat und das Emulsionskonzentrat, stellen typische Handelsformen von herbiziden Wirksubstanzen dar, die vor der Anwendung mit Wasser auf die jeweils erforderliche Wirkstoffkonzentration verdünnt werden. Die benetzbaren Pulver bestehen im wesentlichen aus einer Mischung der Aktivsubstanz mit einer inerten Trägersubstanz und oberflächenaktiven Mitteln, die die leichte Benetzbarkeit des Pulvers mit Wasser gewährleisten. Emulsionskonzentrate bestehen im wesentlichen aus einer konzentrierten Lösung der Aktivsubstanz in einem geeigneten Lösungsmittel, z.B. Mineralöl, Xylol und dgl., die unter Zusatz von oberflächenaktiven Mitteln in Wasser emulgiert ist. Suspensionskonzentrate stellen im wesentlichen eine Suspension einer festen Aktivsubstanz und gegebenenfalls anderer fester Zusätze in Wasser dar, der zur Stabilisierung geeignete oberflächenaktive Mittel zugesetzt wurden. Die Konzentrate sind jeweils so formuliert, dass sie für sich in einem möglichst weiten Temperaturbereich längere Zeit bei der Lagerung und beim Transport stabil sind und dass sie vor der Anwendung mit Wasser auf die jeweils erforderliche Konzentration an Aktivsubstanz verdünnt werden können. Dabei müssen die Gebrauchsverdünnungen zumindestens für die Dauer der Applikation hinreichend stabil und homogen sein, um bei der Applikation und in den dabei verwendeten Geräten keine Störungen zu verursachen. Um diese Erfordernisse zu erfüllen, müssen die jeweils verwendeten Hilfsmittel, wie Trägersubstanzen und oberflächenaktive Mittel, auf die jeweilige Aktivsubstanz abgestimmt werden. Auch die Wahl der Formulierungsart wird weitgehend durch die physikalischen und chemischen Eigenschaften der Aktivsubstanz bestimmt. So konnte beispielsweise Pendimethalin bisher nicht als Suspensionskonzentrat formuliert werden.

Obwohl die vorgenannten Handelsformen von herbiziden Wirksubstanzen in der Regel durchaus eine sichere Anwendung der Wirkstoffe gewährleisten, so sind einzelne von ihnen doch mit gewissen Nachteilen behaftet. Beispielsweise kann die Anwendung von benetzbaren Pulvern aufgrund der dabei auftretenden Staubbildung mit Belästigungen für die mit der Anwendung der herbiziden Mittel betrauten Personen verbunden sein. Ferner ist es häufig nicht einfach, ohne viel apparativen Aufwand aus den benetzbaren Pulvern, beispielsweise bei der Herstellung von Tankmischungen, homogene, leicht redispergierbare Suspensionen herzustellen. Bei Emulsionskonzentraten treten diese Nachteile nicht auf, jedoch ist bei ihnen ein gewisser Nachteil in ihrem Gehalt an organischen Lösungsmitteln und der dadurch verursachten Brennbarkeit und/oder der ungünstigen Beeinflussung der Toxizität und des Herstellungspreises der Konzentrate zu sehen. Wässrige Suspensionskonzentrate sind frei von den erwähnten Nachteilen und stellen daher, sofern die mit ihrer Herstellung verbundenen Probleme für die jeweilige Aktivsubstanz gelöst werden können, die bevorzugte Handelslform dar.

Es ist bekannt, dass sich Chlortoluron und Pendimethalin hinsichtlich ihres Wirkungsspektrums in vorteilhafter Weise ergänzen. Da bisher keine Formulierung zur Verfügung steht, die beide Wirkstoffe nebeneinander enthält, wurde vorgeschlagen, für die einzelnen Wirkstoffe bereits bestehende Formulierungen vor der Anwendung miteinander zu vermischen. Dies führt zwar in einzelnen Fällen, beispielsweise bei der Vermischung eines Emulsionskonzentrats von Pendimethalin und eines Suspensionskonzentrats von Chlortoluron, zu brauchbaren Ergebnissen, dies ist jedoch im Hinblick darauf, dass stets nur bestimmte, im Einzelfall zu ermittelnde Formulierungen miteinander verträglich sind, keine sichere Methode. Noch problematischer ist die Mischung emulgierbarer Pulver mit Emulsions- und Suspensionskonzentraten.

Es war daher die Aufgabe der vorliegenden Erfindung, ein fliessfähiges herbizides Mittel in Form eines wässrigen Suspensionskonzentrates bereitzustellen, das als Wirkstoffe Chlortoluron und Pendimethalin nebeneinander enthält.

Zur Lösung dieser Aufgabe wird erfindungsgemäss ein fliessfähiges herbizides Mittel in Form eines wässrigen Suspensionskonzentrates vorgeschlagen, das dadurch gekennzeichnet ist, dass es
300-600 g/l einer Mischung von Chlortoluron und Pendimethalin
20-40 g/l eines Salzes eines Mono- oder Di-(phenolpolyglykoläther)-phosphorsäureesters der Formel I 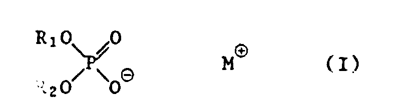
in welcher R₁ einen Rest der Formel 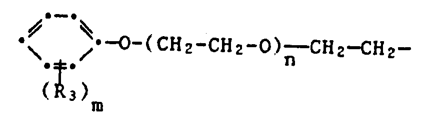
bedeutet, R₂ die gleiche Bedeutung hat wie R₁ oder für Wasserstoff steht, und M^{⊕}ein Natrium-, Kalium-, Diethylammonium-, Triethylammonium-, Diethanolammonium- oder Triethanolammoniumion bedeutet, wobei R₃ für Wasserstoff, C₃-C₁₀-Alkyl oder Styryl, m für eine ganze Zahl von 1-4 und n für eine ganze Zahl von 4-40 steht,
10-40 g/l eines strukturbildenden Silikats
0.5-2 g/l eines Hilfsdispergators
1-5 g/l eines Antischaummittels
1-5 g/l eines Konservierungsmittels
50-100 g/l eines Frostschutzmittels und
ad 1000 ml Wasser
enthält.

Das erfindungsgemässe fliessfähige herbizide Mittel enthält vorzugsweise 450-550 g/l einer Mischung von Chlortoluron und Pendimethalin.

Die Zusammensetzung im erfindungsgemässen herbiziden Mittel vorliegenden Wirkstoffgemisches von Chlortoluron und Pendimethalin kann in weiten Grenzen variiert werden. In der Regel beträgt das Mengenverhältnis von Chlortoluron zu Pendimethalin 10:1 bis 1:10. Vorzugsweise beträgt das Mengenverhältnis von Chlortoluron zu Pendimethalin 4:1 und insbesondere 3:2.

Die erfindungsgemässen herbiziden Mittel können ein Salz eines Mono- oder Di-(phenolpolyglykolether)-phosphorsäureesters der Formel I oder mehrere solche Salze enthalten. Die Salze der Formel I können als reine Mono- oder Disalze oder als Gemische von Mono- und Disalzen verwendet werden. Besonders geeignete Salze von Mono- und Di-(phenolpolyglykolether)-phosphorsäureester der Formel I sind die Triethanolaminsalze. Der an die Phenylgruppe des Restes R₁ gebundene Rest R₃ bedeutet als C₃-C₁₀-Alkylrest in erster Linie geradkettige Alkylreste, wie n-Propyl, n-Butyl, n-Pentyl, n-Hexyl, n-Heptyl, n-Octyl, n-Nonyl oder n-Decyl, umfasst jedoch auch die verzweigten Isomeren dieser Reste, wie tert. Butyl, Dimethylpentyl, Dimethylhexyl, Dimethyloctyl und Diethylpropyl. Bevorzugte Bedeutungen des Restes R₃ sind n-Nonyl und Styryl. Die bevorzugte Bedeutung für m ist 1-3 und die bevorzugte Bedeutung für n ist 6-30.

Als Beispiele für substituierte Phenylgruppen, die im Rest R₁ vorliegen können seien 4-n-Nonylphenyl, 2,4,6-Tri-n-butylphenyl, 2,4,6-Tristyrylphenyl, 2,4-Di-n-nonylphenyl, 2,4,6-Tri-n-pentylphenyl, 2,4-Distyrylphenyl, 4-Styrylphenyl, 2,3,4,6-Tetrastyrylphenyl, 4-n-Decylphenyl, 4-n-Heptylphenyl, 4-n-Pentylphenyl, 2,4-Di-n-hexylphenyl, 2,4-Di-n-octylphenyl, 4-n-Octylphenyl, 4-n-Hexylphenyl, 2,4-Di-n-pentylphenyl und 2,4,6-Tri-n-pentylphenyl genannt. Bevorzugte Phenylgruppen, die in den Resten R₁ und R₂ vorliegen können, sind 4-n-Nonylphenyl und trisubstituierte Phenylgruppen, insbesondere 2,4,6-Tristyrylphenyl. In den Salzen von Mono- und Di-(phenolpolyglykolether)-phosphorsäureestern der Formel I bedeutet n, falls im Rest R₁ oder in den Resten R₁ und R₂ 4-n-Nonylphenylreste vorliegen, vorzugsweise 5-10 und, falls im Rest R₁ oder in den Resten R₁ und R₂ 2,4,6-Tristyrylphenylgruppen vorliegen, vorzugsweise 15-25.

Als typische Vertreter von erfindungsgemäss verwendbaren Salzen von Mono- und Di-(phenolpolyglykolether)-phosphorsäureestern der Formel I seien die Natrium-, Kalium-, Diethylamin-, Triethylamin-, Diethanolamin- und insbesondere Triethanolaminsalze des Mono- und Di-(tristyrylphenolhexadecaglykolether)-phosphorsäureesters, Mono-und Di-(tristyrolphenoloctadecaglykolether)-phosphorsäureesters, Mono- und Di-(tristyrylphenolnonadecaglykolether)-phosphorsäureesters, Mono- und Di-(tristyrylphenoleicosaglykolether)-phosphorsäureesters, Mono- und Di-(tristyrylphenoldocosaglykolether)-phosphorsäureesters, Mono- und Di-(nonyllphenoylhexaglykolether)-phosphorsäureesters, Mono- und Di-(nonylphenoloctaglykolether)-phosphorsäureesters, Mono- und Di-(nonylphenolnonaglykolether)-phosphorsäureesters genannt. Die im Handel erhältlichen Salze von Phenolpolyglykoletherphosphorsäureestern der Formel I stellen in der Regel Gemische der entsprechenden Salze von Mono- und Diestern dar. Auch in Bezug auf die Substitution im Phenylrest sind die im Handel erhältlichen Produkte in der Regel Gemische mit verschiedenem Substitutionsgrad (m = 1-4). Derartige Gemische können vorteilhaft für die Herstellung der erfindungsgemässen herbiziden Mittel verwendet werden.

Als strukturbildende Silikate kommen natürliche Kieselsäuren oder diese enthaltende Mineralien, wie Diatomeenerde, Kieselgur oder quellfähige Tone, wie Bentonit, Montmorillonit, Hectonit oder Attapulgit, in Betracht. Ferner sind synthetische Kieselsäuren, wie pyrogene oder gefällte Kieselsäuren, Kieselgele, und Kieselsäuren vom Aerosil-Typ geeignet.

Als Hilfsdispergatoren, die in den erfindungsgemässen herbiziden Mitteln enthalten sein können, kommen sowohl Substanzen, die den Viskositätsgrad günstig beeinflussen, als auch Substanzen, die die Suspension zusätzlich stabilisieren, in Betracht. So können als Hilfsdispergatoren in wasserlösliche oder in Wasser quellfähige Verdickungsmittel oder synthetische oder halbsythetische Makromoleküle zugesetzt werden. Geeignete Hilfsdispergatoren, die den erfindungsgemässen herbiziden Mitteln zugesetzt werden können sind Polysaccharide, insbesondere Polysaccharide vom Xantham-, Alginat-, Guar- oder Cellulose-Typ, oder synthetische Makromoleküle, wie Polyethylenglykole, Polyvinylpyrrolidone, Polyvinylalkohole, Polyacrylate und insbesondere mit Triethanolamin oder Alkali neutralisierte Mischpolymere von Acrylsäure und Acrylsäureestern. Besonders geeignet sind anionische Heteropolysaccharide, die aus den Monosacchariden Glukose und Mannose und Glucuronsäure gebildet sind.

Als Antifrostmittel, die den erfindungsgemässen herbiziden Mitteln zur Erhaltung der Fliessfähigkeit bei tiefen Temperaturen und zur Verhinderung des Ausfrierens von Wasser zugesetzt werden können, sind Glykole und Polyole, wie Ethylenglykol, Propylenglykol und Glyzerin, sowie Polyethylenglykole, wie Di-, Tri- und Tetraethylenglykol, und ferner Harnstoff geeignet. Ein bevorzugtes Antifrostmittel ist Ethylenglykol.

Als Antischaummittel können die erfindungsgemässen herbiziden Mittel Siliconöl, sowie Entschäumer auf der Basis von Tributylphosphat und ferner Ligninsulfonate enthalten. Bevorzugte Antischaummittel sind Silikonöle.

Als Konservierungsmittel, die in den erfindungsgemässen herbiziden Mitteln enthalten sein können, kommen wässrige Lösungen von Formaldehyd, insbesondere die handelsübliche 37 %-ige Formaldehydlösung, sowie chlorierte Phenole oder Dehydracetsäurenatriumsalz in Betracht. Vorzugsweise enthalten die erfindungsgemässen herbiziden Mittel wässrige Formaldehydlösungen als Konservierungsmittel.

Die erfindungsgemässen herbidziden Mittel sind fliessfähig und zeichnen sich durch gute Transport- und Lagerstabilität aus. Sie können leicht mit Wasser auf die gewünschte Anwendungskonzentration verdünnt werden und ermöglichen die einfache und sichere Anwendung der vorteilhaften Wirkstoffkombination bestehend aus Chlortoluron und Pendimethalin.

Die erfindungsgemässen fliessfähigen herbiziden Mittel zeichnen sich durch eine breite Wirkung gegen dikotyle Unkräuter aus. Sie zeigen insbesondere eine gute und sichere Wirkung gegen Veronica, Hohlzahn, Taubnessel, Viola, Windhalm, Rispe, Ackerfuchsschwanz, Kamille und Vogelmiere. Sie sind insbesondere zum Einsatz in Kulturen von Wintergetreide, wie Wintergerste, Winterweizen, Winterroggen und Triticale geeignet.

Die Herstellung der erfindungsgemässen fliessfähigen herbiziden Mittel erfolgt in der Weise, dass man Chlortoluron, Pendimethalin, das strukturbildende Silikat, das Salz eines Mono- oder Di-(phenolpolyglykolether)-phosphorsäureesters der Formel I und Wasser in einem Mischer anteigt und nach Zugabe des Konservierungsmittels, des Antischaummittels und weiterem Wasser etwa 1 bis 2 Stunden lang dispergiert.

Das erhaltene Konzentrat wird bei 0 bis 7°C einer Feinmahlung unterworfen, die beispielsweise mit einer Dyno-Mühle durchgeführt werden kann. Bei dieser Nassmahlung ist darauf zu achten, dass die Temperatur des Produkts am Mühlenausgang 25°C nicht überschreitet. Nach dem Mahlen wird eine wässrige Lösung des Mischdispergators zugesetzt, bis zur gleichmässigen Verteilung gerührt und mit Wasser auf das Endvolumen aufgefüllt.

Im nachfolgenden Beispiel wird zur weiteren Erläuterung der vorliegenden Erfindung die Zusammensetzung eines typischen fliessfähigen herbiziden Mittels angegeben, das nach der vorgenannten Methode hergestellt wurde.

### Beispiel:

300 g/l Chlortoluron
200 g/l Pendimethalin
25 g/l Triethanolaminsalz eines Gemisches von Mono- und Di-(2,4,6-tristyrylphenolpolyglykolether)-esterphosphat der Formel I mit 16-20 Ethylenglykoleinheiten (®Soprophor FL)
20 g/l strukturbildendes Silikat (Kieselsäure FK 320)
1 g/l Silikonöl (®Rhodossil 426 R)
1,2 g/l Hilfsdispergator (®Biopolymer XB 23)
1 g/l Konservierungsmittel (Formalin)
80 g/l Frostschutzmittel (Ethylenglykol)
ad. 1000 ml Wasser (ca. 450 ml) .
Dichte: 1,08 g/cm³ (20°C)

## Patentansprüche

1. Fliessfähiges herbizides Mittel in Form eines wässrigen Suspensionskonzentrats, dadurch gekennzeichnet, dass es
300-600 g/l einer Mischung von Chlortoluron und Pendimethalin
20-40 g/l eines Salzes eines Mono- oder Di-(phenolpolyglykolether)-phosphorsäureesters der Formel I 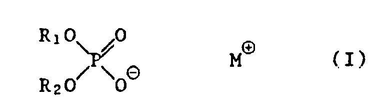 in welcher R₁ einen Rest der Formel 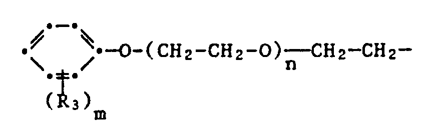 bedeutet, R₂ die gleiche Bedeutung hat wie R₁ oder für Wasserstoff steht, und M^{⊕}ein Natrium-, Kalium-, Diethylammonium-, Triethylammonium-, Diethanolammonium- oder Triethanolammoniumion bedeutet, wobei R₃ für Wasserstoff, C₃-C₁₀-Alkyl oder Styryl, m für eine ganze Zahl von 1-4 und n für eine ganze Zahl von 4-40 steht,
10-40 g/l eines strukturbildenden Silikats
0.5-2 g/l eines Hilfsdispergators
1-5 g/l eines Antischaummittels
1-5 g/l eines Konservierungsmittels
50-100 g/l eines Frostschutzmittels und
ad 1000 ml Wasser
enthält.

2. Fliessfähiges herbizides Mittel nach Anspruch 1, dadurch gekennzeichnet, dass es 450-550 g/l einer Mischung von Chlortoluron und Pendimethalin enthält.

3. Fliessfähiges herbizides Mittel nach Anspruch 1, dadurch gekennzeichnet, dass das Mengenverhältnis von Chlortoluron zu Pendimethalin 10:1 bis 1:10 beträgt.

4. Fliessfähiges herbizides Mittel nach Anspruch 1, dadurch gekennzeichnet, dass das Mengenverhältnis von Chlortoluron zu Pendimethalin 4:1 beträgt.

5. Fliessfähiges herbizides Mittel nach Anspruch 1, dadurch gekennzeichnet, dass das Mengenverhältnis von Chlortoluron zu Pendimethalin 3:2 beträgt.

6. Fliessfähiges herbizides Mittel nach Anspruch 1, dadurch gekennzeichnet, dass es als Salz eines Mono- und Di-(phenolpolyglykolether)-phosphorsäureesters der Formel I das Triethanolaminsalz eines Gemisches eines Mono- und Di-phenolpolyglykolether)-phosphorsäureesters der Formel I enthält.

7. Fliessfähiges herbizides Mittel nach Ansprüchen 1 und 5, dadurch gekennzeichnet, dass es ein Natrium-, Kalium-, Diethylamin-, Triethylamin-, Diethanolamin- oder Triethanolaminsalz eines Mono-und Di-(phenolpolyglykolether)phosphorsäureesters der Formel I enthält, in welcher R₃ n-Nonyl und Styryl, m 1-3 und n 6-30 bedeutet.

8. Fliessfähiges herbizides Mittel nach Anspruch 1, dadurch gekennzeichnet, dass es als Salz eines Mono- und Di-(phenolpolyglykolether)-phosphorsäureesters der Formel I das Natrium-, Kalium-, Diethylamin-, Triethylamin-, Diethanolamin- oder Triethanolaminsalz des Mono- und Di-(tristyrylphenolhexadecaglykolether)-phosphorsäureesters, Mono-und Di-(tristyrolphenoloctadecaglykolether)-phosphorsäureesters, Mono- und Di-(tristyrylphenolnonadecaglykolether)-phosphorsäureesters, Mono- und Di-(tristyrylphenoleicosaglykolether)-phosphorsäureesters, Mono- und Di-(tristyrylphenoldocosaglykolether)-phosphorsäureesters, Mono- und Di-(nonylphenolhexaglykolether)-phosphorsäureesters, Mono- und Di-(nonylphenoloctaglykolether)-phosphorsäureesters oder Mono- und Di-(nonylphenolnonaglykolether)-phosphorsäureesters enthält.

9. Fliessfähiges herbizides Mittel nach Anspruch 1, dadurch gekennzeichnet, dass es als strukturbildendes Silikat Diatomeenerde, Kieselgur, Bentonit, Montmorillonit, Hectonit oder Attapulgit enthält.

10. Fliessfähiges herbizides Mittel nach Anspruch 1, dadurch gekennzeichnet, dass es als strukturbildendes Silikat eine synthetische Kieselsäure enthält.

11. Fliessfähiges herbizides Mittel nach Anspruch 1, dadurch gekennzeichnet, dass es als Hilfsdispergator ein anionisches Heteropolysaccharid enthält, das aus den Monosacchariden Glukose und Mannose und Glucuronsäure gebildet ist.

12. Fliessfähiges herbizides Mittel nach Anspruch 1, dadurch gekennzeichnet, dass es als Antifrostmittel Ethylenglykol enthält.

13. Fliessfähiges herbizides Mittel nach Anspruch 1, dadurch gekennzeichnet, dass es als Antischaummittel Silikonöl enthält.

14. Fliessfähiges herbizides Mittel nach Anspruch 1, dadurch gekennzeichnet, dass es als Konservierungsmittel Formaldehyd enthält.

## Claims

1. A flowable herbicide in the form of an aqueous suspension concentrate, which comprises
300 to 600 g/l of a mixture of chlortoluron and pendimethalin,
20 to 40 g/l of a salt of a mono- or di-(phenol polyglycol ether) phosphoric acid ester of formula I 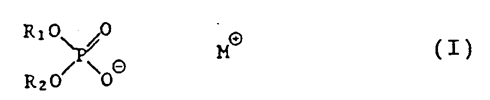 wherein R₁ is a radical of the formula 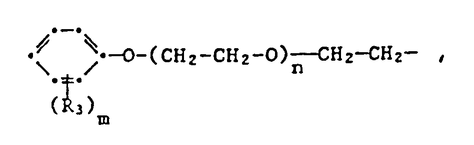 R₂ has the same meaning as R₁ or is hydrogen, and M^{⊕} is a sodium, potassium, diethylammonium, triethylammonium, diethanolammonium or triethanolammonium ion, R₃ being hydrogen, C₃-C₁₀alkyl or styryl, m being an integer from 1 to 4, and n being an integer from 4 to 40,
10 to 40 g/l of a structural silicate,
0.5 to 2 g/l of an auxiliary dispersant,
1 to 5 g/l of a defoamer,
1 to 5 g/l of a preservative,
50 to 100 g/l of an antifreeze, and
ad 1000 ml water.

2. A flowable herbicide according to claim 1, which comprises 450 to 550 g/l of a mixture of chlortoluron and pendimethalin.

3. A flowable herbicide according to claim 1, wherein the quantitative ratio of chlortoluron to pendimethalin is 10:1 to 1:10.

4. A flowable herbicide according to claim 1, wherein the quantitative ratio of chlortoluron to pendimethalin is 4:1.

5. A flowable herbicide according to claim 1, wherein the quantitative ratio of chlortoluron to pendimethalin is 3:2.

6. A flowable herbicide according to claim 1, which comprises as a salt of a mono- and di-(phenol polyglycol ether) phosphoric acid ester of formula I the triethanolamine salt of a mixture of a mono- and di-(phenol polyglycol ether) phosphoric acid ester of formula I.

7. A flowable herbicide according to claims 1 and 5, which comprises a sodium, potassium, diethylamine, triethylamine, diethanolamine or triethanolamine salt of a mono- and di-(phenol polyglycol ether) phosphoric acid ester of formula I wherein R₃ is n-nonyl and styryl, m is 1-3 and n is 6-30.

8. A flowable herbicide according to claim 1, which comprises as a salt of a mono- and di-(phenol polyglycol ether) phosphoric acid ester of formula I the sodium, potassium, diethylamine, triethylamine, diethanolamine or triethanolamine salt of the mono- and di-(tristyrylphenol hexadecaglycol ether) phosphoric acid ester, mono-and di-(tristyrolphenol octadecaglycol ether) phosphoric acid ester, mono- and di-(tristyrylphenol nonadecaglycol ether) phosphoric acid ester, mono- and di-(tristyrylphenol eicosaglycol ether) phosphoric acid ester, mono- and di-(tristyrylphenol docosaglycol ether) phosphoric acid ester, mono- and di-(nonylphenol hexaglycol ether) phosphoric acid ester, mono- and di-(nonylphenol octaglycol ether) phosphoric acid ester or mono- and di-(nonylphenol nonaglycol ether) phosphoric acid ester.

9. A flowable herbicide according to claim 1, which comprises as structural silicate diatomaceous earth, kieselguhr, bentonite, montmorillonite, hectonite or attapulgite.

10. A flowable herbicide according to claim 1, which comprises as structural silicate a synthetic silicic acid.

11. A flowable herbicide according to claim 1, which comprises as auxiliary dispersant an anionic heteropolysaccharide formed from the monosaccharides glucose and mannose and glucuronic acid.

12. A flowable herbicide according to claim 1, which comprises as antifreeze ethylene glycol.

13. A flowable herbicide according to claim 1, which comprises as defoamer silicone oil.

14. A flowable herbicide according to claim 1, which comprises as preservative formaldehyde.

## Revendications

1. Produit herbicide fluide à l'état de concentré aqueux pour suspensions, caractérisé en ce qu'il contient :
300 à 600 g/l d'un mélange de Chlortoluron et de Pendimethalin,
20 à 40 g/l d'un sel d'un ester phosphorique de mono- ou di-(éther polyglycolique de phénol) de formule I 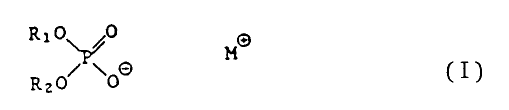 dans laquelle R₁ représente un radical de formule 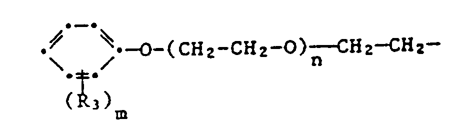 R₂ a la même signification que R₁ ou représente l'hydrogène, M^{⊕} représente un ion sodium, potassium, diéthylammonium, triéthylammonium, diéthanolammonium ou triéthanolammonium, R₃ représente l'hydrogène, un groupe alkyle en C 3-C 10 ou styryle, m est un nombre entier allant de 1 à 4 et n est un nombre entier allant de 4 à 40,
10 à 40 g/l d'un silicate structurant,
0,5 à 2 g/l d'un agent dispersant auxiliaire,
1 à 5 g/l d'un agent anti-mousse,
1 à 5 g/l d'un conservateur,
50 à 100 g/l d'un agent anti-gel, et
de l'eau pour complément à 1000 ml.

2. Produit herbicide fluide selon revendication 1, caractérisé en ce qu'il contient de 450 à 550 g/l d'un mélange de Chlortoluron et de Pendimethalin.

3. Produit herbicide fluide selon revendication 1, caractérisé en ce que les proportions relatives entre le Chlortoluron et le Pendimethalin vont de 10:1 à 1:10.

4. Produit herbicide fluide selon revendication 1, caractérisé en ce que les proportions relatives entre le chlortoluron et le Pendimethalin sont de 4:1.

5. Produit herbicide fluide selon revendication 1, caractérisé en ce que les proportions relatives entre le Chlortoluron et le Pendimethalin sont de 3:2.

6. Produit herbicide fluide selon revendication 1, caractérisé en ce qu'il contient en tant que sel d'ester phosphorique de mono- et di-(éther polyglycolique de phénol) de formule I, le sel de triéthanolamine d'un mélange d'esters phosphoriques de mono- et di-(éther polyglycolique de phénol) de formule I.

7. Produit herbicide fluide selon les revendications 1 à 5, caractérisé en ce qu'il contient un sel de sodium, de potassium, de diéthylamine, de triéthylamine, de diéthanolamine ou de triéthanolamine d'un ester phosphorique de mono- et di-(éther polyglycolique de phénol) de formule I dans laquelle R₃ représente des groupes n-nonyle et styryle, m va de 1 à 3 et n de 6 à 30.

8. Produit herbicide fluide selon revendication 1, caractérisé en ce qu'il contient en tant que sel d'un ester phosphorique de mono- et di-(éther polyglycolique de phénol) de formule I, le sel de sodium, de potassium, de diéthylamine, de triéthylamine, de diéthanolamine ou de triéthanolamine de l'ester phosphorique de mono- et di-(éther hexadécaglycolique du tristyrylphénol), de l'ester phosphorique de mono- et di-(éther octadécaglycolique du tristyrylphénol), de l'ester phosphorique de mono- et di-(éther nonadécaglycolique du tristyrylphénol), de l'ester phosphorique de mono- et di-(éther éicosaglycolique du tristyrylphénol), de l'ester phosphorique de mono- et di-(éther docosaglycolique du tristyrylphénol), de l'ester phosphorique de mono- et di-(éther hexaglycolique du nonylphénol), de l'ester phosphorique de mono- et di-(éther octaglycolique du nonylphénol) ou de l'ester phosphorique de mono- et di-(éther nonaglycolique du nonylphénol).

9. Produit herbicide fluide selon revendication 1, caractérisé en ce qu'il contient en tant que silicate structurant de la terre de diatomées, du kieselguhr, de la bentonite, de la montmorillonite, de l'hectonite ou de l'attapulgite.

10. Produit herbicide fluide selon revendication 1, caractérisé en ce qu'il contient en tant que silicate structurant une silice synthétique.

11. Produit herbicide fluide selon revendication 1, caractérisé en ce qu'il contient en tant qu'agent dispersant auxiliaire un hétéropolysaccharide anionique formé des monosaccharides glucose et mannose, et de l'acide glucuronique.

12. Produit herbicide fluide selon revendication 1, caractérisé en ce qu'il contient en tant qu'agent anti-gel de l'éthylène-glycol.

13. Produit herbicide fluide selon revendication 1, caractérisé en ce qu'il contient en tant qu'agent anti-mousse une huile de silicone.

14. Produit herbicide fluide selon revendication 1, caractérisé en ce qu'il contient en tant que conservateur du formaldéhyde.
